# EUROPEAN PATENT APPLICATION

(11) **EP 4 184 345 A1**
(43) Date of publication of application: **24.05.2023**
(21) Application number: 21846138.2
(22) Date of filing: 22.07.2021
(51) Int. Cl.: G06F 16/33

(54) **DATA LINEAGE PRESENTATION METHOD, APPARATUS, AND SYSTEM**

(30) Priority: 24.07.2020 CN 202010723442
(71) Applicant: Huawei Cloud Computing Technologies Co., Ltd., Guizhou 550025 (CN)
(72) Inventor: ZHAO, Weikai, Shenzhen, Guangdong 518129 (CN); JI, Zhenfeng, Shenzhen, Guangdong 518129 (CN)
(74) Representative: Huawei European IPR
(86) International application number: PCT/CN2021/107867
(87) International publication number: WO 2022/017465

(57) **Abstract**

This application provides a data lineage presentation method and system, and a device. The method includes: receiving first data, second data, third data, and fourth data, where the first data and the second data are data at a same level, the third data and the fourth data are data at a same level, the first data is a parent node of the third data, and the second data is a parent node of the fourth data; displaying the first data at a first location in a first row/column of a display interface, and displaying the second data at a second location in the first row/column of the display interface; obtaining a data lineage presentation operation entered by a user; indicating, based on the data lineage presentation operation, a terminal device to display the third data in the display interface, where the third data is displayed at a third location close to the first location in a second row/column; and displaying the fourth data in the display interface, where the fourth data is displayed at a fourth location that is in a remaining location in the second row/column and that is close to the second location. The foregoing solution can clearly present a lineage relationship between data.

## Description

### TECHNICAL FIELD

This application relates to the big data field, and in particular, to a data lineage presentation method and system, and a device.

### BACKGROUND

In the big data era, data increases explosively, there is a large amount of data of various types, and the data is very complex. After the complex data is fused, converted, and circulated, new data is generated and aggregated into a data ocean.

In a process of data generation, fusion, conversion, circulation, and extinction, a relationship is formed between the data, and may be referred to as a data lineage relationship, a data consanguinity relationship, a data origin relationship, a data pedigree relationship, and the like. It is assumed that original data is stored in a data table A, an intermediate table B is obtained after the data table A is processed, and a finally presented data table C is formed after the intermediate table B is processed. In this case, a data link from the data table A to the data table B to the data table C represents a data lineage relationship between the three tables. Data migration and flowing can be clearly understood by analyzing the data lineage relationship, to provide a basis for data value evaluation and data management.

To facilitate data lineage analysis, the data lineage relationship needs to be visualized, to clearly present the data lineage relationship to a user. However, in an existing visualization method, clarity is insufficient when the data lineage relationship is presented, resulting in poor user experience.

### SUMMARY

This application provides a data lineage presentation method and system, and a device, to clearly present a lineage relationship between data.

According to a first aspect, a data lineage presentation method is provided. The method includes:
receiving, by a service node, first data, second data, third data, and fourth data, where the first data and the second data are data at a same level, the third data and the fourth data are data at a same level, the first data is a parent node of the third data, the second data is a parent node of the fourth data, the first data is displayed at a first location in a first row/column of a display interface, and the second data is displayed at a second location in the first row/column of the display interface;
receiving a data lineage presentation operation entered by a user;
indicating, based on the data lineage presentation operation, a terminal device to display the third data in the display interface, where the third data is displayed at a third location that is in a second row/column and that is close to the first location; and
indicating, based on the data lineage presentation operation, the terminal device to display the fourth data in the display interface, where the fourth data is displayed at a fourth location that is in a remaining location in the second row/column and that is close to the second location.

In some possible implementations, the method further includes:
indicating, based on the data lineage presentation operation, the terminal device to display fifth data in the display interface, where the fifth data is displayed at a fifth location that is in a third row/column and that is close to the fourth location, and the fourth data is a parent node of the fifth data.

In some possible implementations, an outer frame of the first data and an outer frame of the third data are represented by using a first color.

An outer frame of the second data, an outer frame of the fourth data, and an outer frame of the fifth data are represented by using a second color.

The first color is different from the second color.

In some possible implementations, transparency of the outer frame of the second data is greater than transparency of the outer frame of the fourth data, and the transparency of the outer frame of the fourth data is greater than transparency of the outer frame of the fifth data.

In some possible implementations, a first bus is provided at a location that is between the first row/column and the second row/column and that is close to the second row/column, the first data is connected to the first bus through a line segment, and the third data is connected to the first bus through a line segment.

A second bus is provided at a location that is between the first row/column and the second row/column and that is close to the first row/column, the second data is connected to the second bus through a line segment, and the fourth data is connected to the second bus through a line segment.

The first bus and the second bus do not overlap.

In some possible implementations, when a quantity of buses between the first row/column and the second row/column is greater than a quantity of buses between the second row/column and the third row/column, a first spacing between the first row/column and the second row/column is equal to a second spacing between the second row/column and the third row/column, where the first spacing is equal to a product of a distance occupied by each bus and the quantity of buses between the first row/column and the second row/column.

In some possible implementations, when a quantity of buses between the first row/column and the second row/column is greater than a quantity of buses between the second row/column and the third row/column, a first spacing between the first row/column and the second row/column is not equal to a second spacing between the second row/column and the third row/column, where the first spacing is equal to a product of a distance occupied by each bus and the quantity of buses between the first row/column and the second row/column, and the second spacing is equal to a product of the distance occupied by each bus and the quantity of buses between the second row/column and the third row/column.

In some possible implementations, a size of the first spacing varies with the quantity of buses between the first row/column and the second row/column.

A size of the second spacing varies with the quantity of buses between the second row/column and the third row/column.

In some possible implementations, the outer frames of the first data to the fifth data are represented by using any one of a square frame, a circular frame, an elliptic frame, a triangular frame, a pentagonal frame, a hexagonal frame, a cloud-shaped frame, and a database-shaped frame.

According to a second aspect, a data lineage presentation method is provided. The method includes:
indicating a terminal device to display first data at a first location in a first row/column of a display interface and display second data at a second location, where the first data and the second data are data at a same level;
selecting, from a second row/column of the display interface, a third location close to the first data, and indicating the terminal device to display third data at the third location; and
selecting, from a remaining location in the second row/column of the display interface, a fourth location close to the second location, and indicating the terminal device to display fourth data at the fourth location.

The third data and the fourth data are data at a same level, the first data is a parent node of the third data, and the second data is a parent node of the fourth data.

In some possible implementations, a fifth location close to the fourth location is selected from a third row/column of the display interface, and the terminal device is indicated to display fifth data at the fifth location, where the fourth data is a parent node of the fifth data.

In some possible implementations, an outer frame of the first data and an outer frame of the third data are represented by using a first color.

An outer frame of the second data, an outer frame of the fourth data, and an outer frame of the fifth data are represented by using a second color.

The first color is different from the second color.

In some possible implementations, transparency of the outer frame of the second data is greater than transparency of the outer frame of the fourth data, and the transparency of the outer frame of the fourth data is greater than transparency of the outer frame of the fifth data.

In some possible implementations, a first bus is provided at a location that is between the first row/column and the second row/column and that is close to the second row/column, the first data is connected to the first bus through a line segment, and the third data is connected to the first bus through a line segment.

A second bus is provided at a location that is between the first row/column and the second row/column and that is close to the first row/column, the second data is connected to the second bus through a line segment, and the fourth data is connected to the second bus through a line segment.

The first bus and the second bus do not overlap.

In some possible implementations, when a quantity of buses between the first row/column and the second row/column is greater than a quantity of buses between the second row/column and the third row/column, a first spacing between the first row/column and the second row/column is equal to a second spacing between the second row/column and the third row/column, where the first spacing is equal to a product of a distance occupied by each bus and the quantity of buses between the first row/column and the second row/column.

In some possible implementations, when a quantity of buses between the first row/column and the second row/column is greater than a quantity of buses between the second row/column and the third row/column, a first spacing between the first row/column and the second row/column is not equal to a second spacing between the second row/column and the third row/column, where the first spacing is equal to a product of a distance occupied by each bus and the quantity of buses between the first row/column and the second row/column, and the second spacing is equal to a product of the distance occupied by each bus and the quantity of buses between the second row/column and the third row/column.

In some possible implementations, a size of the first spacing varies with the quantity of buses between the first row/column and the second row/column.

A size of the second spacing varies with the quantity of buses between the second row/column and the third row/column.

In some possible implementations, the outer frames of the first data to the fifth data are represented by using any one of a square frame, a circular frame, an elliptic frame, a triangular frame, a pentagonal frame, a hexagonal frame, a cloud-shaped frame, and a database-shaped frame.

According to a third aspect, a service node is provided, including a receiving module, an obtaining module, and an indication module.

The receiving module is configured to receive first data, second data, third data, and fourth data, where the first data and the second data are data at a same level, the third data and the fourth data are data at a same level, the first data is a parent node of the third data, the second data is a parent node of the fourth data, the first data is displayed at a first location in a first row/column of a display interface, and the second data is displayed at a second location in the first row/column of the display interface.

The obtaining module is configured to obtain a data lineage presentation operation entered by a user.

The indication module is configured to indicate, based on the data lineage presentation operation, a terminal device to display the third data in the display interface, where the third data is displayed at a third location that is in a second row/column and that is close to the first location.

The indication module is configured to indicate, based on the data lineage presentation operation, the terminal device to display the fourth data in the display interface, where the fourth data is displayed at a fourth location that is in a remaining location in the second row/column and that is close to the second location.

In some possible implementations, the indication module is configured to indicate, based on the data lineage presentation operation, the terminal device to display fifth data in the display interface, where the fifth data is displayed at a fifth location that is in a third row/column and that is close to the fourth location, and the fourth data is a parent node of the fifth data.

In some possible implementations, an outer frame of the first data and an outer frame of the third data are represented by using a first color.

An outer frame of the second data, an outer frame of the fourth data, and an outer frame of the fifth data are represented by using a second color.

The first color is different from the second color.

In some possible implementations, transparency of the outer frame of the second data is greater than transparency of the outer frame of the fourth data, and the transparency of the outer frame of the fourth data is greater than transparency of the outer frame of the fifth data.

In some possible implementations, a first bus is provided at a location that is between the first row/column and the second row/column and that is close to the second row/column, the first data is connected to the first bus through a line segment, and the third data is connected to the first bus through a line segment.

A second bus is provided at a location that is between the first row/column and the second row/column and that is close to the first row/column, the second data is connected to the second bus through a line segment, and the fourth data is connected to the second bus through a line segment.

The first bus and the second bus do not overlap.

In some possible implementations, when a quantity of buses between the first row/column and the second row/column is greater than a quantity of buses between the second row/column and the third row/column, a first spacing between the first row/column and the second row/column is equal to a second spacing between the second row/column and the third row/column, where the first spacing is equal to a product of a distance occupied by each bus and the quantity of buses between the first row/column and the second row/column.

In some possible implementations, when a quantity of buses between the first row/column and the second row/column is greater than a quantity of buses between the second row/column and the third row/column, a first spacing between the first row/column and the second row/column is not equal to a second spacing between the second row/column and the third row/column, where the first spacing is equal to a product of a distance occupied by each bus and the quantity of buses between the first row/column and the second row/column, and the second spacing is equal to a product of the distance occupied by each bus and the quantity of buses between the second row/column and the third row/column.

In some possible implementations, a size of the first spacing varies with the quantity of buses between the first row/column and the second row/column.

A size of the second spacing varies with the quantity of buses between the second row/column and the third row/column.

In some possible implementations, the outer frames of the first data to the fifth data are represented by using any one of a square frame, a circular frame, an elliptic frame, a triangular frame, a pentagonal frame, a hexagonal frame, a cloud-shaped frame, and a database-shaped frame.

According to a fourth aspect, a service node is provided. The service node includes an indication module and a selection module.

The indication module is configured to indicate a terminal device to display first data at a first location in a first row/column of a display interface and display second data at a second location, where the first data and the second data are data at a same level.

The selection module is configured to select, from a second row/column of the display interface, a third location close to the first data.

The indication module is configured to indicate the terminal device to display third data at the third location.

The selection module is further configured to select, from a remaining location in the second row/column of the display interface, a fourth location close to the second location.

The indication module is configured to indicate the terminal device to display fourth data at the fourth location.

The third data and the fourth data are data at a same level, the first data is a parent node of the third data, and the second data is a parent node of the fourth data.

In some possible implementations, the indication module is configured to select, from a third row/column of the display interface, a fifth location close to the fourth location, and the indication module is configured to indicate the terminal device to display fifth data at the fifth location, where the fourth data is a parent node of the fifth data.

In some possible implementations, an outer frame of the first data and an outer frame of the third data are represented by using a first color.

An outer frame of the second data, an outer frame of the fourth data, and an outer frame of the fifth data are represented by using a second color.

The first color is different from the second color.

In some possible implementations, transparency of the outer frame of the second data is greater than transparency of the outer frame of the fourth data, and the transparency of the outer frame of the fourth data is greater than transparency of the outer frame of the fifth data.

In some possible implementations, a first bus is provided at a location that is between the first row/column and the second row/column and that is close to the second row/column, the first data is connected to the first bus through a line segment, and the third data is connected to the first bus through a line segment.

A second bus is provided at a location that is between the first row/column and the second row/column and that is close to the first row/column, the second data is connected to the second bus through a line segment, and the fourth data is connected to the second bus through a line segment.

The first bus and the second bus do not overlap.

In some possible implementations, when a quantity of buses between the first row/column and the second row/column is greater than a quantity of buses between the second row/column and the third row/column, a first spacing between the first row/column and the second row/column is equal to a second spacing between the second row/column and the third row/column, where the first spacing is equal to a product of a distance occupied by each bus and the quantity of buses between the first row/column and the second row/column.

In some possible implementations, when a quantity of buses between the first row/column and the second row/column is greater than a quantity of buses between the second row/column and the third row/column, a first spacing between the first row/column and the second row/column is not equal to a second spacing between the second row/column and the third row/column, where the first spacing is equal to a product of a distance occupied by each bus and the quantity of buses between the first row/column and the second row/column, and the second spacing is equal to a product of the distance occupied by each bus and the quantity of buses between the second row/column and the third row/column.

In some possible implementations, a size of the first spacing varies with the quantity of buses between the first row/column and the second row/column.

A size of the second spacing varies with the quantity of buses between the second row/column and the third row/column.

In some possible implementations, the outer frames of the first data to the fifth data are represented by using any one of a square frame, a circular frame, an elliptic frame, a triangular frame, a pentagonal frame, a hexagonal frame, a cloud-shaped frame, and a database-shaped frame.

According to a fifth aspect, a data lineage presentation system is provided, including a terminal device and a cloud platform. The terminal device is connected to the cloud platform, and the cloud platform performs the method according to any one of the implementations of the first aspect or any one of the implementations of the second aspect.

According to a sixth aspect, a computer-readable storage medium is provided, including instructions. When the instructions are run on a cloud platform, the cloud platform is enabled to perform the method according to any one of the implementations of the first aspect or any one of the implementations of the second aspect.

According to a seventh aspect, a cloud platform is provided. The cloud platform includes a plurality of service nodes, and the service node includes a processor and a memory. The processor executes code in the memory to perform the method according to any one of the implementations of the first aspect or any one of the implementations of the second aspect.

According to an eighth aspect, a computer program product is provided, including a computer program. When the computer program is read and executed by a computing device, the computing device is enabled to perform the method according to any one of the implementations of the first aspect or any one of the implementations of the second aspect.

In the foregoing solution, an average distance between parent nodes and child nodes is relatively short, and a lineage relationship between the parent nodes and the child nodes is easily observed. Therefore, a data lineage relationship is clearly presented.

### BRIEF DESCRIPTION OF DRAWINGS

FIG. 1 is a schematic visualized diagram of a data lineage relationship according to this application;
FIG. 2A to FIG. 2C are schematic diagrams of a process of forming the schematic visualized diagram of the data lineage relationship shown in FIG. 1;
FIG. 3 is a schematic visualized diagram of a data lineage relationship according to this application;
FIG. 4A to FIG. 4C are schematic diagrams of a process of forming the visualization manner of the data lineage relationship shown in FIG. 3;
FIG. 5 is a schematic diagram of data representation methods according to some embodiments;
FIG. 6A to FIG. 6C are schematic diagrams of some manners of oscillation close to a parent node;
FIG. 7A and FIG. 7B are schematic diagrams of some distance settings between columns;
FIG. 8A to FIG. 8C are schematic diagrams of distance setting changes between columns;
FIG. 9 is a flowchart of a data lineage presentation method according to this application;
FIG. 10 is a flowchart of another data lineage presentation method according to this application;
FIG. 11 is a schematic diagram of a data lineage presentation system according to this application;
FIG. 12 is a block diagram of a structure of a terminal device according to this application;
FIG. 13 is a block diagram of a structure of a terminal device according to this application;
FIG. 14 is a block diagram of a structure of a cloud platform according to this application;
FIG. 15 is a schematic diagram of a structure of a service node according to this application; and
FIG. 16 is a schematic diagram of a structure of another service node according to this application.

### DESCRIPTION OF EMBODIMENTS

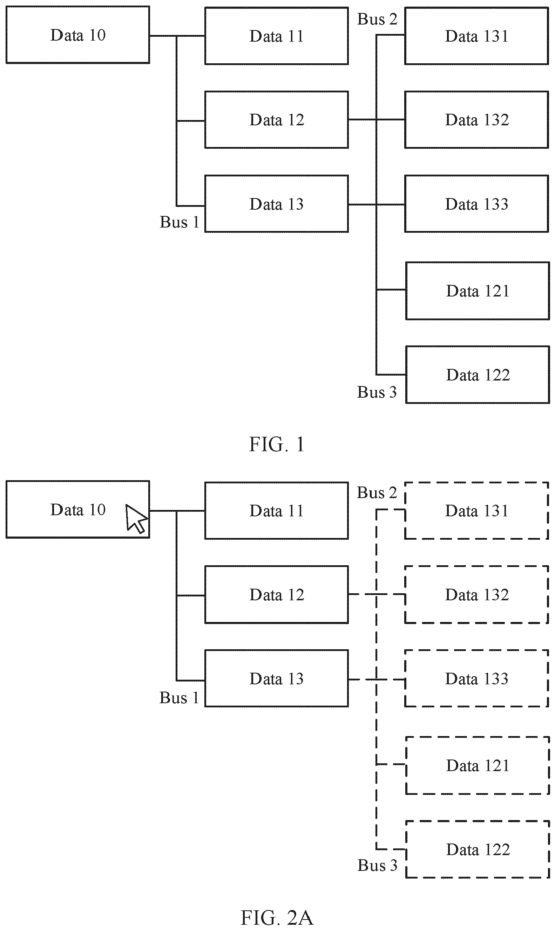

FIG. 1 is a schematic visualized diagram of a data lineage relationship according to this application. The data lineage relationship in this embodiment is of a hierarchical structure. Parent-level data includes data 10, child-level data includes data 11, data 12, and data 13, and grandchild-level data includes data 131, data 132, data 133, data 121, and data 122. Child nodes of data 10 include data 11, data 12, and data 13, child nodes of data 12 include data 121 and data 122, and child nodes of data 13 include data 131, data 132, and data 133.

When a visualization manner is used for representation, a visualization-based representation manner of the data lineage relationship mainly includes a data representation manner, a data arrangement manner, and a data connection manner. In the example shown in FIG. 1, the data representation manner may be specifically as follows: Data 10, data 11, data 12, data 13, data 131, data 132, data 133, data 121, and data 122 each may be represented by using one block. The data arrangement manner may be specifically as follows: Parent-level data 10 is placed in a leftmost column in a top-down manner, child-level data 11, data 12, and data 13 are placed in a middle column in the top-down manner, and grandchild-level data 131, data 132, data 133, data 121, and data 122 are placed in a rightmost column in the top-down manner. A distance between the leftmost column and the middle column is fixed, a distance between the rightmost column and the middle column is fixed, and the distance between the leftmost column and the middle column is the same as the distance between the rightmost column and the middle column. The data connection manner may be specifically as follows: Bus 1 is placed between the parent-level data and the child-level data, parent-node data 10 is connected to bus 1 through a line segment, and child-node data 11, data 12, and data 13 are also connected to bus 1 through line segments. Bus 2 is placed between the child-level data and the grandchild-level data, parent-node data 13 is connected to bus 2 through a line segment, and child-node data 131, data 132, and data 133 are also connected to bus 2 through line segments. Bus 3 is placed between the child-level data and the grandchild-level data, parent-node data 12 is connected to bus 3 through a line segment, and child-node data 121 and data 122 are also connected to bus 3 through line segments.

With reference to FIG. 2A to FIG. 2C, the following describes in detail a process of forming the visualization manner of the data lineage relationship shown in FIG. 1. Details are as follows:
As shown in FIG. 2A, parent-level data 10 is first placed in a first row of the leftmost column in the top-down manner. When data 10 is clicked, child-level data 11, data 12, and data 13 are placed in the middle column in the top-down manner. Then, bus 1 is placed between the parent-level data and the child-level data, parent-node data 10 is connected to bus 1 through a line segment, and child-node data 11, data 12, and data 13 are also connected to bus 1 through line segments.

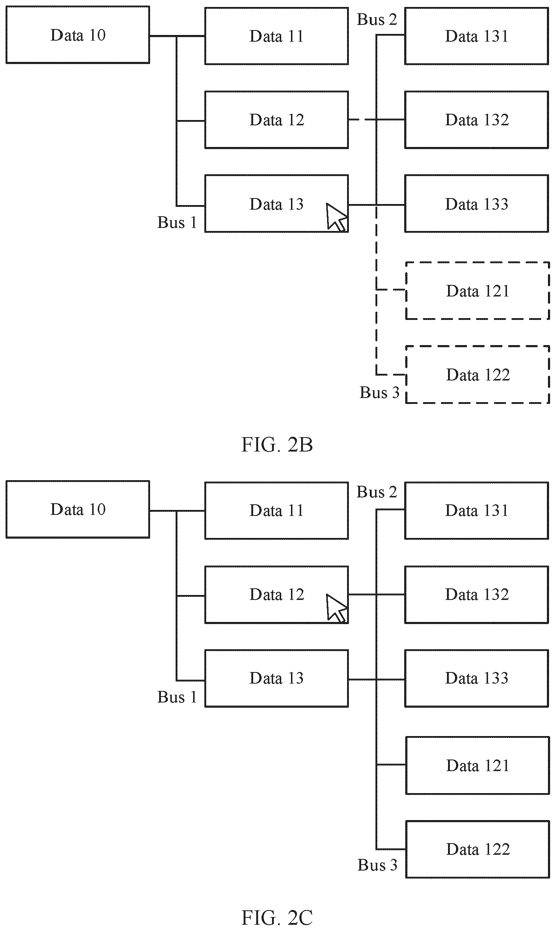

As shown in FIG. 2B, when data 13 is clicked, grandchild-level data 131, data 132, and data 133 are placed in the rightmost column in the top-down manner. Then, bus 2 is placed between the child-level data and the grandchild-level data, parent-node data 13 is connected to bus 2 through a line segment, and child-node data 131, data 132, and data 133 are also connected to bus 2 through line segments.

As shown in FIG. 2C, when data 12 is clicked, grandchild-level data 121 and data 122 are placed following data 133 in the rightmost column in the top-down manner. Then, bus 3 is placed between the child-level data and the grandchild-level data, parent-node data 12 is connected to bus 3 through a line segment, and child-node data 121 and data 122 are also connected to bus 3 through line segments.

However, in the foregoing solution, an average distance between parent nodes and child nodes is very long. For a group of data in which a parent node is data 10 and child nodes are data 11, data 12, and data 13, because data 11 and data 10 are located in a same row, a distance between data 10 and data 11 is defined as "1"; because data 12 is one row below data 10, a distance between data 10 and data 12 is defined as "2"; and because data 13 is two rows below data 10, a distance between data 10 and data 13 is defined as "3". Therefore, an average distance between parent-node data 10 and child-node data 11, data 12, and data 13 is 2. For a group of data in which a parent node is data 13 and child nodes are data 131, data 132, and data 133, because data 133 and data 13 are located in a same row, a distance between data 133 and data 13 is defined as "1"; because data 132 is one row above data 13, a distance between data 132 and data 13 is defined as "2"; and because data 131 is two rows above data 13, a distance between data 131 and data 13 is defined as "3". Therefore, an average distance between parent-node data 13 and child-node data 131, data 132, and data 133 is 2. For a group of data in which a parent node is data 12 and child nodes are data 121 and data 122, because data 121 is two rows below data 12, a distance between data 121 and data 12 is defined as "3"; and because data 122 is three rows below data 12, a distance between data 122 and data 12 is defined as "4". Therefore, an average distance between parent-node data 12 and child-node data 121 and data 122 is 3.5. Therefore, the average distance between the parent nodes and the child nodes is relatively long, and consequently it is difficult for a user to observe a lineage relationship between the parent nodes and the child nodes. In addition, bus 3 between parent-node data 12 and child-node data 121 and data 122 overlaps bus 2 between parent-node data 13 and child-node data 131, data 132, and data 133, and consequently it is more difficult for the user to observe the lineage relationship between the parent nodes and the child nodes.

It may be understood that, when there is a larger amount of data, an average distance between parent nodes and child nodes is farther, and bus overlapping is more serious. In the foregoing visualization method, clarity is insufficient when the data lineage relationship is presented. Consequently, it is difficult for the user to observe the lineage relationship between the parent nodes and the child nodes and it is more difficult to observe data migration and flowing to provide a basis for data value evaluation and data management.

To resolve the foregoing problem, this application provides a data lineage relationship visualization method, a device, and a system, to clearly present a data lineage relationship.

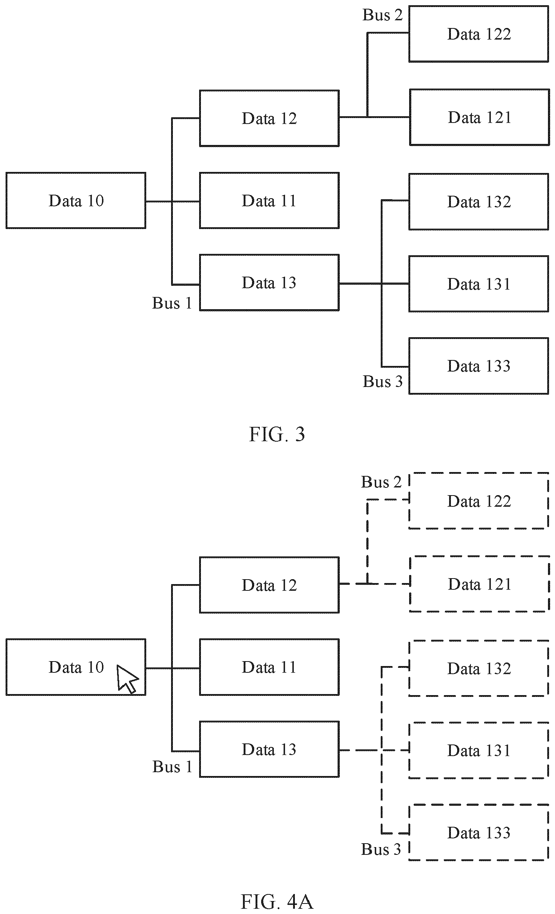

FIG. 3 is a schematic visualized diagram of a data lineage relationship according to this application. The data lineage relationship in this embodiment is of a hierarchical structure. Parent-level data includes data 10, child-level data includes data 11, data 12, and data 13, and grandchild-level data includes data 131, data 132, data 133, data 121, and data 122. Child nodes of data 10 include data 11, data 12, and data 13, child nodes of data 12 include data 121 and data 122, and child nodes of data 13 include data 131, data 132, and data 133.

When a visualization manner is used for representation, a visualization-based representation manner of the data lineage relationship mainly includes a data representation manner, a data arrangement manner, and a data connection manner. In the example shown in FIG. 3, the data representation manner may be specifically as follows: Data 10, data 11, data 12, data 13, data 131, data 132, data 133, data 121, and data 122 each may be represented by using one block.

The data arrangement manner may be specifically as follows: Parent-level data 10 is placed at a middle location of a leftmost column, child-level data 11, data 12, and data 13 are placed in a middle column in a manner of oscillation close to parent-node data 10 (a specific meaning is parsed below), grandchild-level data 131, data 132, and data 133 are placed in a rightmost column in a manner of oscillation close to parent-node data 13 (a specific meaning is parsed below), and then grandchild-level data 121 and data 122 are placed in the rightmost column in a manner of oscillation close to parent-node data 13 (a specific meaning is parsed below). The data connection manner may be specifically as follows: Bus 1 is placed between the parent-level data and the child-level data, parent-node data 10 is connected to bus 1 through a line segment, and child-node data 11, data 12, and data 13 are also connected to bus 1 through line segments. Bus 2 is placed at a location that is between the child-level data and the grandchild-level data and that is close to the grandchild-level data, parent-node data 13 is connected to bus 2 through a line segment, and child-node data 131, data 132, and data 133 are also connected to bus 2 through line segments. Bus 3 is placed at a location that is between the child-level data and the grandchild-level data and that is close to the child-level data, parent-node data 12 is connected to bus 3 through a line segment, and child-node data 121 and data 122 are also connected to bus 3 through line segments.

With reference to FIG. 4A to FIG. 4C, the following describes in detail a process of forming the visualization manner of the data lineage relationship shown in FIG. 3. Details are as follows:
As shown in FIG. 4A, parent-level data 10 is first placed in the middle of the leftmost column. When data 10 is clicked, it is found that a location that is in the middle column and that is currently closest to data 10 is a location that is in a same row as data 10, and therefore data 11 is placed at the location; then it is found that a location that is in the middle column and that is currently closest to data 10 is a location that is one row above data 10, and therefore data 12 is placed at the location; and finally it is found that a location that is in the middle column and that is currently closest to data 10 is a location that is one row below data 10, and therefore data 13 is placed at the location (this is the foregoing manner of oscillation close to parent-node data 10). Bus 1 is placed between the parent-level data and the child-level data, parent-node data 10 is connected to bus 1 through a line segment, and child-node data 11, data 12, and data 13 are also connected to bus 1 through line segments.

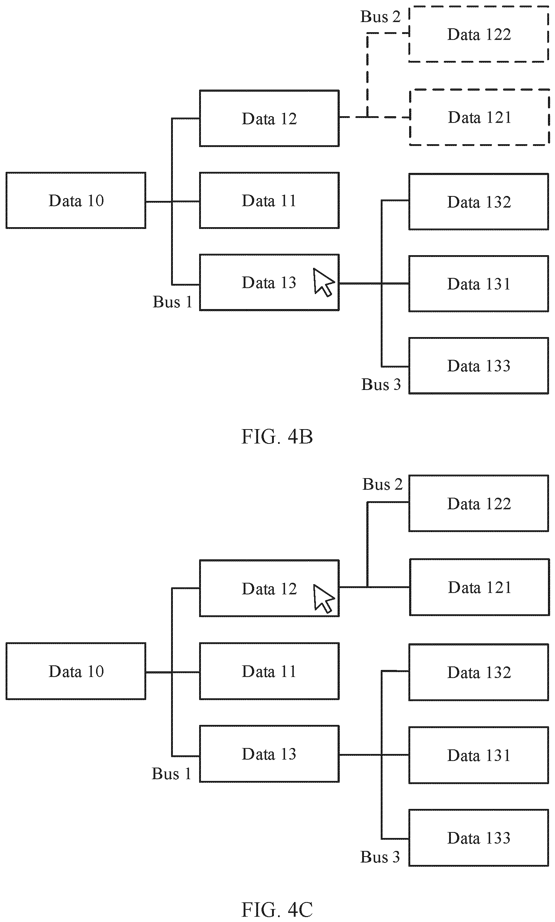

As shown in FIG. 4B, when data 13 is clicked, it is found that a location that is in the rightmost column and that is currently closest to data 13 is a location that is in a same row as data 13, and therefore data 131 is placed at the location; then it is found that a location that is in the rightmost column and that is currently closest to data 13 is a location that is one row above data 13, and therefore data 132 is placed at the location; and finally it is found that a location that is in the rightmost column and that is currently closest to data 13 is a location that is one row below data 13, and therefore data 133 is placed at the location (this is the foregoing manner of oscillation close to parent-node data 13). Bus 2 is placed at a location that is between the child-level data and the grandchild-level data and that is close to the grandchild-level data, parent-node data 13 is connected to bus 2 through a line segment, and child-node data 131, data 132, and data 133 are also connected to bus 2 through line segments.

As shown in FIG. 4C, when data 12 is clicked, it is found that a location that is in the rightmost column and that is currently closest to data 12 is a location that is in a same row as data 12, and therefore data 121 is placed at the location; and then it is found that a location that is in the rightmost column and that is currently closest to data 12 is a location that is one row above data 12, and therefore data 122 is placed at the location (this is the foregoing manner of oscillation close to parent-node data 12). Bus 3 is placed at a location that is between the child-level data and the grandchild-level data and that is close to the child-level data, parent-node data 12 is connected to bus 3 through a line segment, and child-node data 121 and data 122 are also connected to bus 3 through line segments.

In the foregoing solution, an average distance between parent nodes and child nodes is relatively short. For a group of data in which a parent node is data 10 and child nodes are data 11, data 12, and data 13, because data 11 and data 10 are located in a same row, a distance between data 10 and data 11 is defined as "1"; because data 12 is one row above data 10, a distance between data 10 and data 12 is defined as "2"; and because data 13 is one row below data 10, a distance between data 10 and data 13 is defined as "2". Therefore, an average distance between parent-node data 10 and child-node data 11, data 12, and data 13 is 5/3. For a group of data in which a parent node is data 13 and child nodes are data 131, data 132, and data 133, because data 131 and data 13 are located in a same row, a distance between data 131 and data 13 is defined as "1 "; because data 132 is one row above data 13, a distance between data 132 and data 13 is defined as "2"; and because data 133 is one row below data 13, a distance between data 133 and data 13 is defined as "2". Therefore, an average distance between parent-node data 13 and child-node data 131, data 132, and data 133 is 5/3. For a group of data in which a parent node is data 12 and child nodes are data 121 and data 122, because data 121 and data 12 are located in a same row, a distance between data 121 and data 12 is defined as "1"; and because data 122 is one row above data 12, a distance between data 122 and data 12 is defined as "2". Therefore, an average distance between parent-node data 12 and child-node data 121 and data 122 is 1.5. Therefore, the average distance between the parent nodes and the child nodes is relatively short, so that it is easy for a user to observe a lineage relationship between the parent nodes and the child nodes. In addition, bus 3 between parent-node data 12 and child-node data 121 and data 122 does not overlap bus 2 between parent-node data 13 and child-node data 131, data 132, and data 133, so that it is easy for the user to observe the lineage relationship between the parent nodes and the child nodes.

In some possible implementations, data may be a value, a number, a text, an image, a sound, a video, and the like. This is not specifically limited herein. The data may exist in a single form, or may exist in a form of a specific data structure, for example, an array, a stack, a queue, a linked list, a tree, a graph, a pile, a hash table, or a database. This is not specifically limited herein.

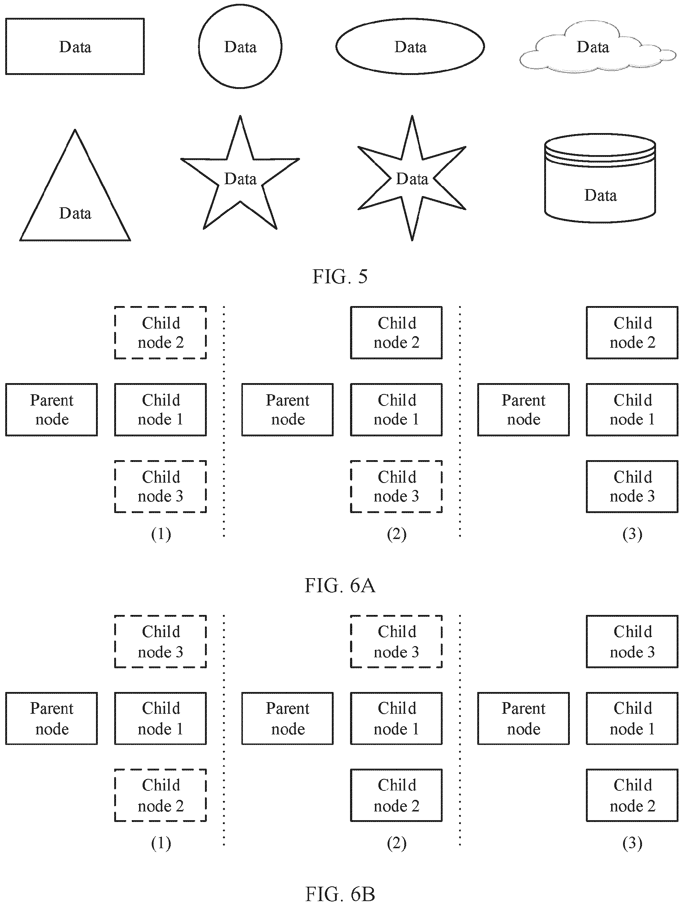

In some possible implementations, as shown in FIG. 5, in addition to being represented by using a square frame, an outer frame of the data may alternatively be represented by using a frame in a regular shape or an irregular shape, for example, a circular frame, an elliptic frame, a triangular frame, a pentagonal frame, a hexagonal frame, a cloud-shaped frame, or a database-shaped frame. To highlight a lineage relationship between a parent node and a child node, outer frames of data of both the parent node and the child node may be represented by using a same color. With reference to the example shown in FIG. 3, outer frames of data 12, data 121, and data 122 may all be represented by using red, and outer frames of data 13, data 131, data 132, and data 133 may all be represented by using blue. In addition, a near-far relationship of lineage may further be represented with reference to transparency. For example, a color of an outer frame of a grandparent node is red, and transparency is 0%; a color of an outer frame of a parent node is red, and transparency is 20%; a color of an outer frame of a child node is red, and transparency is 40%; and a color of an outer frame of a grandchild node is red, and transparency is 60%. For a better representation effect, a special effect such as a shadow, a special line type, or a bold line may further be used. This is not specifically limited herein.

In some possible implementations, there may be at least the following manners of oscillation close to a parent node.

In a first manner, as shown in FIG. 6A, oscillation may be performed close to a parent node in a middle-up-down manner. A specific oscillation process is as follows: As shown in (1) in FIG. 6A, a location that is in a current column and that is in a same row as the parent node is first searched for to place data of child node 1. Then, as shown in (2) in FIG. 6A, a location that is in the current column and that is one row above the parent node is searched for to place data of child node 2. Finally, as shown in (3) in FIG. 6A, a location that is in the current column and that is one row below the parent node is searched for to place data of child node 3, and so on. This manner is the manner in FIG. 4A to FIG. 4C.

In a second manner, as shown in FIG. 6B, oscillation may be performed close to a parent node in a middle-down-up manner. A specific oscillation process is as follows: As shown in (1) in FIG. 6B, a location that is in a current column and that is in a same row as the parent node is first searched for to place data of child node 1. Then, as shown in (2) in FIG. 6B, a location that is in the current column and that is one row below the parent node is searched for to place data of child node 2. Finally, as shown in (3) in FIG. 6B, a location that is in the current column and that is one row above the parent node is searched for to place data of child node 3, and so on.

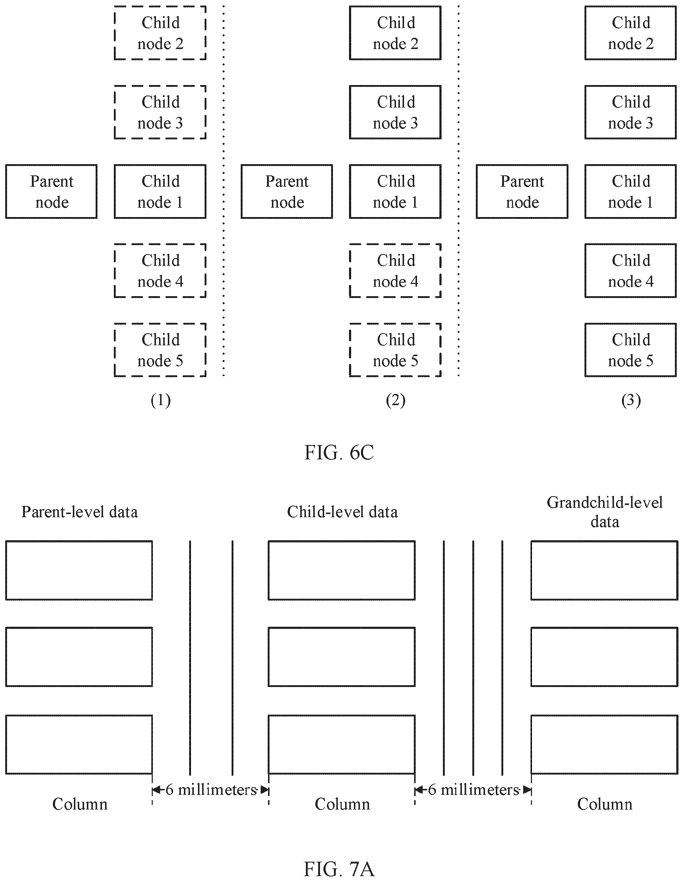

In a third manner, as shown in FIG. 6C, oscillation may be performed close to a parent node in a middle-up-up-down-down manner. A specific oscillation process is as follows: As shown in (1) in FIG. 6C, a location that is in a current column and that is in a same row as the parent node is first searched for to place data of child node 1. Then, as shown in (2) in FIG. 6C, a location that is in the current column and that is one row above the parent node and a location that is in the current column and that is two rows above the parent node are searched for to place data of child node 2 and child node 3. Finally, as shown in (3) in FIG. 6C, a location that is in the current column and that is one row below the parent node and a location that is in the current column and that is two rows below the parent node are searched for to place data of child node 4 and child node 5, and so on.

In some possible implementations, a data connection manner may be as follows: A bus is first placed between two columns of data, and then a parent node and a child node are connected to the bus through line segments. To highlight a lineage relationship between the parent node and the child node, the bus and the line segments between the parent node and the child node may be represented by using a same color as the parent node and the child node. In addition, a near-far relationship of lineage may further be represented with reference to transparency. For example, colors of a bus and line segments between a grandparent node and a parent node is red, and transparency is 10%; colors of a bus and line segments between the parent node and a child node are red, and transparency is 30%; and colors of a bus and line segments between the child node and a grandchild node are red, and transparency is 50%.

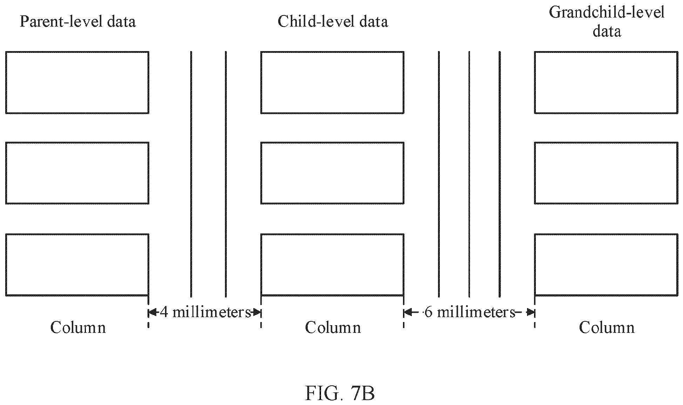

In some possible implementations, a spacing between columns may be set as follows: A spacing between columns is fixedly set, and the spacing between the columns can ensure that there is enough space at any time to accommodate a bus between the two columns of data. If a total of two buses need to be disposed between a column in which parent-level data is located and a column in which child-level data is located, and a column width occupied by each bus is 2 millimeters, a distance between the two columns may be set to 4 millimeters. Herein, spacings between different columns may be the same, or may be different. When distances between different columns are the same, a maximum value may be selected. For example, as shown in FIG. 7A, if a total of two buses need to be disposed between a column in which parent-level data is located and a column in which child-level data is located, and a column width occupied by each bus is 2 millimeters, a distance between the two columns needs to be set to 4 millimeters; and if a total of three buses need to be disposed between the column in which the child-level data is located and a column in which grandchild-level data is located, and a column width occupied by each bus is 2 millimeters, a distance between the two columns needs to be set to 6 millimeters. A maximum value is selected herein. Therefore, a spacing between the column in which the parent-level data is located and the column in which the child-level data is located may be set to 6 millimeters, and a spacing between the column in which the child-level data is located and the column in which the grandchild-level data is located may also be set to 6 millimeters. When distances between different columns are different, setting may be performed according to a requirement. For example, as shown in FIG. 7B, if a total of two buses need to be disposed between a column in which parent-level data is located and a column in which child-level data is located, and a column width occupied by each bus is 2 millimeters, a distance between the two columns needs to be set to 4 millimeters; and if a total of three buses need to be disposed between the column in which the child-level data is located and a column in which grandchild-level data is located, and a column width occupied by each bus is 2 millimeters, a distance between the two columns needs to be set to 6 millimeters. Setting is performed according to a requirement herein. Therefore, a spacing between the column in which the parent-level data is located and the column in which the child-level data is located may be set to 4 millimeters, and a spacing between the column in which the child-level data is located and the column in which the grandchild-level data is located may be set to 6 millimeters.

To reduce a waste of space, a spacing between columns may alternatively be set as follows: A spacing between columns is fixedly set, and the spacing between the columns can ensure that there is enough space most of the time to accommodate a bus between the two columns of data. It is assumed that a maximum of three buses need to be disposed between a column in which parent-level data is located and a column in which child-level data is located. However, according to statistics, only two buses need to be disposed most of the time between the column in which the parent-level data is located and the column in which the child-level data is located, and a column width occupied by each bus is 2 millimeters. In this case, a distance between the two columns may be set to 4 millimeters. Herein, spacings between different columns may be the same, or may be different. When distances between different columns are the same, a maximum value may be selected. It is assumed that a maximum of three buses need to be disposed between a column in which parent-level data is located and a column in which child-level data is located. According to statistics, only two buses need to be disposed most of the time between the column in which the parent-level data is located and the column in which the child-level data is located, and a column width occupied by each bus is 2 millimeters. In this case, a distance between the two columns needs to be set to 4 millimeters. It is assumed that a maximum of five buses need to be disposed between the column in which the child-level data is located and a column in which grandchild-level data is located. According to statistics, only three buses need to be disposed most of the time between the column in which the child-level data is located and the column in which the grandchild-level data is located, and a column width occupied by each bus is 2 millimeters. In this case, a distance between the two columns needs to be set to 6 millimeters. A maximum value is selected herein. Therefore, a spacing between the column in which the parent-level data is located and the column in which the child-level data is located may be set to 6 millimeters, and a spacing between the column in which the child-level data is located and the column in which the grandchild-level data is located may also be set to 6 millimeters. When distances between different columns are different, setting may be performed according to a requirement. It is assumed that a maximum of three buses need to be disposed between a column in which parent-level data is located and a column in which child-level data is located. According to statistics, only two buses need to be disposed most of the time between the column in which the parent-level data is located and the column in which the child-level data is located, and a column width occupied by each bus is 2 millimeters. In this case, a distance between the two columns needs to be set to 4 millimeters. It is assumed that a maximum of five buses need to be disposed between the column in which the child-level data is located and a column in which grandchild-level data is located. According to statistics, only three buses need to be disposed most of the time between the column in which the child-level data is located and the column in which the grandchild-level data is located, and a column width occupied by each bus is 2 millimeters. In this case, a distance between the two columns needs to be set to 6 millimeters. Setting is performed according to a requirement herein. Therefore, a spacing between the column in which the parent-level data is located and the column in which the child-level data is located may be set to 4 millimeters, and a spacing between the column in which the child-level data is located and the column in which the grandchild-level data is located may be set to 6 millimeters.

In some possible implementations, a spacing between columns may be set as follows: A spacing between columns is dynamically set, and the spacing between the columns can ensure that there is enough space currently to accommodate a bus between the two columns of data. In this case, the spacing between the columns may vary with a quantity of buses between the columns.

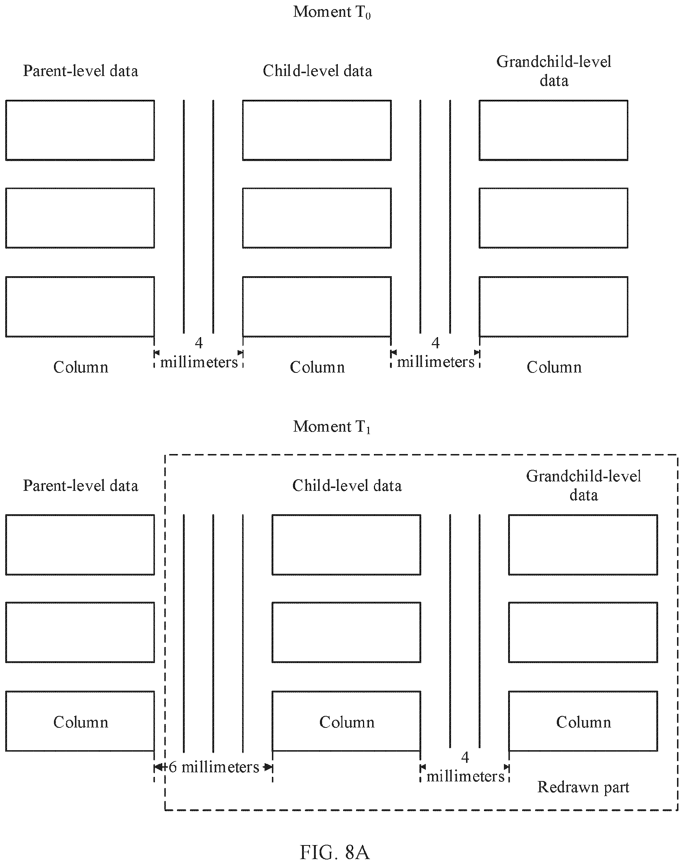

As shown in FIG. 8A, at a current moment T₀, if a total of two buses currently need to be disposed between a column in which parent-level data is located and a column in which child-level data is located, a distance between the two columns may be set to 4 millimeters; and if a total of two buses currently need to be disposed between the column in which the child-level data is located and a column in which grandchild-level data is located, a distance between the two columns may be set to 4 millimeters. At a next moment Ti, if a total of three buses currently need to be disposed between the column in which the parent-level data is located and the column in which the child-level data is located, the distance between the two columns may be set to 6 millimeters; and if a total of two buses currently need to be disposed between the column in which the child-level data is located and the column in which the grandchild-level data is located, the distance between the two columns may be set to 4 millimeters. The buses between the column in which the parent-level data is located and the column in which the child-level data is located, the buses between the column in which the child-level data is located and the column in which the grandchild-level data is located, the column in which the child-level data is located, and the column in which the grandchild-level data is located are redrawn.

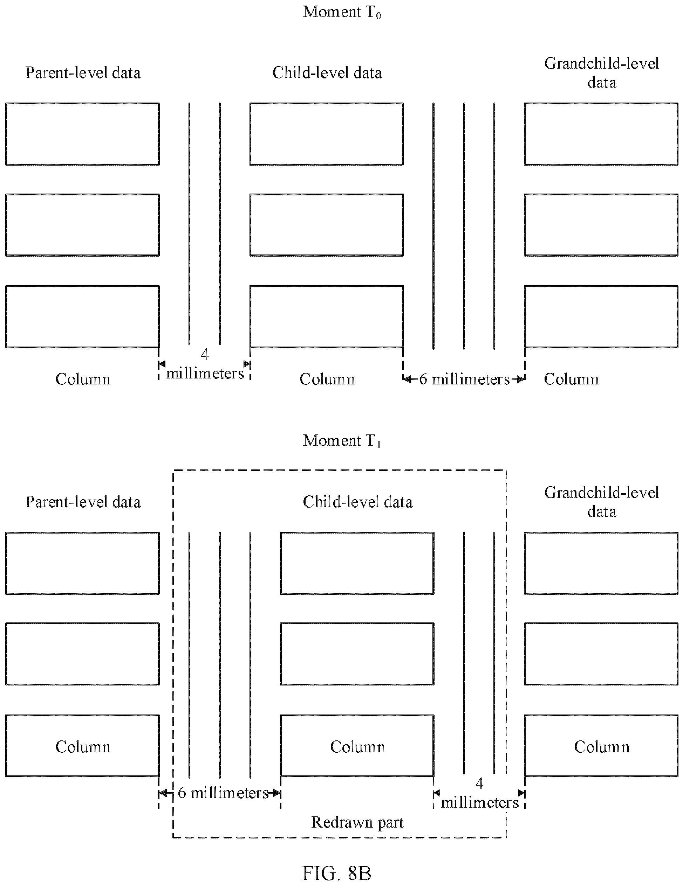

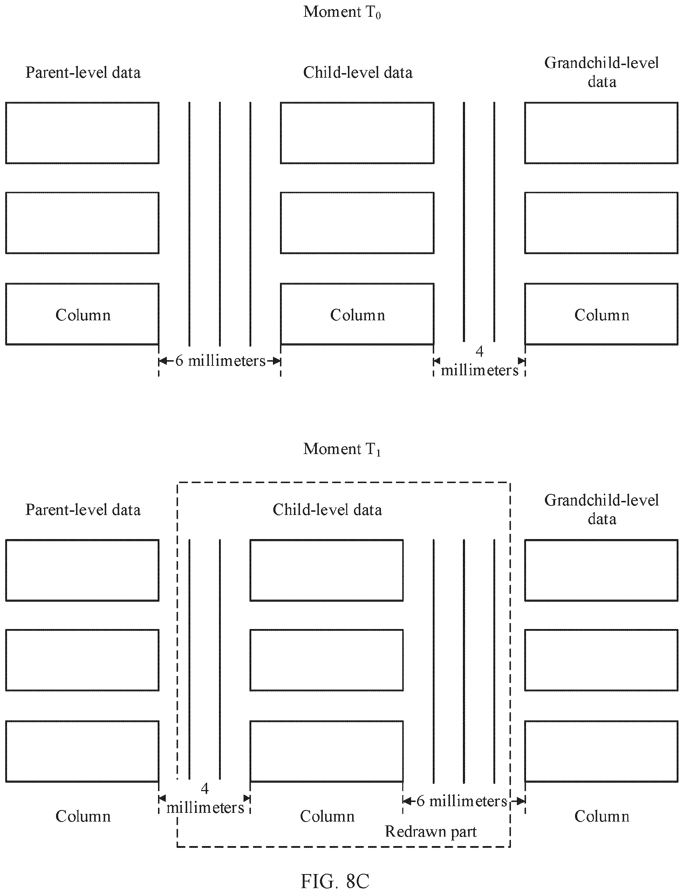

As shown in FIG. 8B, at a current moment T₀, if a total of two buses currently need to be disposed between a column in which parent-level data is located and a column in which child-level data is located, a distance between the two columns may be set to 4 millimeters; and if a total of three buses currently need to be disposed between the column in which the child-level data is located and a column in which grandchild-level data is located, a distance between the two columns may be set to 6 millimeters. At a next moment Ti, if a total of three buses currently need to be disposed between the column in which the parent-level data is located and the column in which the child-level data is located, the distance between the two columns may be set to 6 millimeters; and if a total of two buses currently need to be disposed between the column in which the child-level data is located and the column in which the grandchild-level data is located, the distance between the two columns may be set to 4 millimeters. In this case, only the column in which the child-level data is located, the buses between the column in which the parent-level data is located and the column in which the child-level data is located, and the buses between the column in which the child-level data is located and the column in which the grandchild-level data is located need to be redrawn, and the column in which the grandchild-level data is located does not need to be redrawn. Alternatively, as shown in FIG. 8C, at a current moment T₀, if a total of three buses currently need to be disposed between a column in which parent-level data is located and a column in which child-level data is located, a distance between the two columns may be set to 6 millimeters; and if a total of two buses currently need to be disposed between the column in which the child-level data is located and a column in which grandchild-level data is located, a distance between the two columns may be set to 4 millimeters. At a next moment Ti, if a total of two buses currently need to be disposed between the column in which the parent-level data is located and the column in which the child-level data is located, the distance between the two columns may be set to 4 millimeters; and if a total of three buses currently need to be disposed between the column in which the child-level data is located and the column in which the grandchild-level data is located, the distance between the two columns may be set to 6 millimeters. In this case, only the column in which the child-level data is located, the buses between the column in which the parent-level data is located and the column in which the child-level data is located, and the buses between the column in which the child-level data is located and the column in which the grandchild-level data is located need to be redrawn, and the column in which the parent-level data is located does not need to be redrawn.

In the foregoing example, the user first clicks data 13 to expand child nodes of data 13, and then clicks data 12 to expand child nodes of data 12. In actual application, child nodes of data 13 and data 12 may alternatively be expanded at the same time. In this case, expansion may be performed based on priorities of data 13 and data 12.

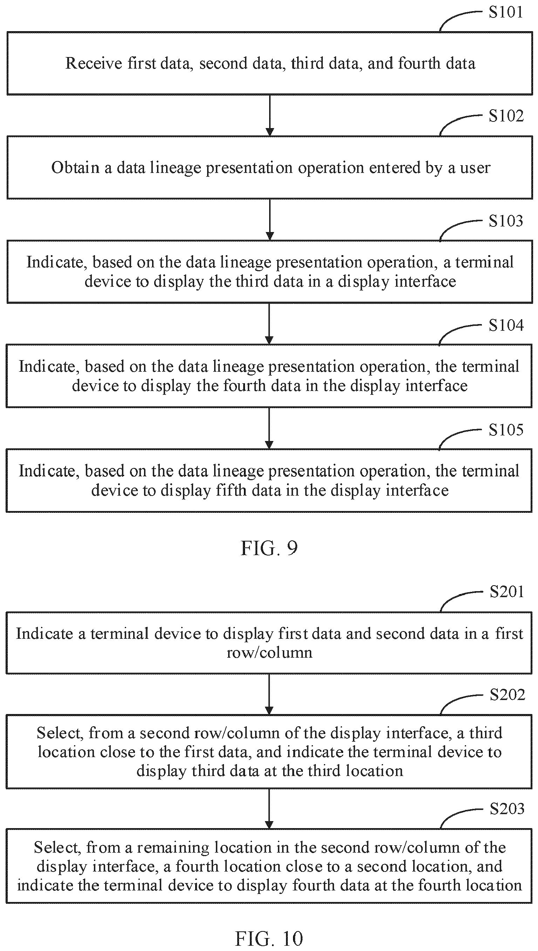

FIG. 9 is a flowchart of a data lineage presentation method according to this application. As shown in FIG. 9, the data lineage presentation method in this implementation includes the following steps.

S101: A service node receives first data, second data, third data, and fourth data, where the first data and the second data are data at a same level, the third data and the fourth data are data at a same level, the first data is a parent node of the third data, the second data is a parent node of the fourth data, the first data is displayed at a first location in a first row/column of a display interface, and the second data is displayed at a second location in the first row/column of the display interface.

S102: The service node obtains a data lineage presentation operation entered by a user.

S103: The service node indicates, based on the data lineage presentation operation, a terminal device to display the third data in the display interface, where the third data is displayed at a third location that is in a second row/column and that is close to the first location.

S104: The service node indicates, based on the data lineage presentation operation, the terminal device to display the fourth data in the display interface, where the fourth data is displayed at a fourth location that is in a remaining location in the second row/column and that is close to the second location.

S105: The service node indicates, based on the data lineage presentation operation, the terminal device to display fifth data in the display interface, where the fifth data is displayed at a fifth location that is in a third row/column and that is close to the fourth location, and the fourth data is a parent node of the fifth data.

Shapes, colors, and transparency of outer frames of the first data to the fifth data may be set in the following manner.

In some possible implementations, the outer frames of the first data to the fifth data are represented by using any one of a square frame, a circular frame, an elliptic frame, a triangular frame, a pentagonal frame, a hexagonal frame, a cloud-shaped frame, and a database-shaped frame.

In some possible implementations, the outer frame of the first data and the outer frame of the third data are represented by using a first color, the outer frame of the second data, the outer frame of the fourth data, and the outer frame of the fifth data are represented by using a second color, and the first color is different from the second color.

In some possible implementations, transparency of the outer frame of the second data is greater than transparency of the outer frame of the fourth data, and the transparency of the outer frame of the fourth data is greater than transparency of the outer frame of the fifth data.

A bus between rows/columns may be set in the following manner.

In some possible implementations, a first bus is provided at a location that is between the first row/column and the second row/column and that is close to the second row/column, the first data is connected to the first bus through a line segment, and the third data is connected to the first bus through a line segment; a second bus is provided at a location that is between the first row/column and the second row/column and that is close to the first row/column, the second data is connected to the second bus through a line segment, and the fourth data is connected to the second bus through a line segment; and the first bus and the second bus do not overlap.

A spacing between rows/columns may be set in at least the following manners.

In a first manner, when a quantity of buses between the first row/column and the second row/column is greater than a quantity of buses between the second row/column and the third row/column, a first spacing between the first row/column and the second row/column is equal to a second spacing between the second row/column and the third row/column, where the first spacing is equal to a product of a distance occupied by each bus and the quantity of buses between the first row/column and the second row/column.

In a second manner, when a quantity of buses between the first row/column and the second row/column is greater than a quantity of buses between the second row/column and the third row/column, a first spacing between the first row/column and the second row/column is not equal to a second spacing between the second row/column and the third row/column, where the first spacing is equal to a product of a distance occupied by each bus and the quantity of buses between the first row/column and the second row/column, and the second spacing is equal to a product of the distance occupied by each bus and the quantity of buses between the second row/column and the third row/column.

In a third manner, a size of the first spacing does not vary with the quantity of buses between the first row/column and the second row/column; and a size of the second spacing does not vary with the quantity of buses between the second row/column and the third row/column.

In a fourth manner, a size of the first spacing varies with the quantity of buses between the first row/column and the second row/column; and a size of the second spacing varies with the quantity of buses between the second row/column and the third row/column.

Displaying the third data, the fourth data, and the fifth data based on the data lineage presentation operation entered by the user may include at least the following two manners.

In a first manner, the data lineage presentation operation entered by the user is double-clicking a blank part of the display interface. After the user performs the operation of double-clicking the blank part of the display interface, the terminal device sends the operation of double-clicking the blank part of the display interface to the service node of a cloud platform, and the service node simultaneously displays the third data, the fourth data, and the fifth data in the display interface based on the operation of double-clicking the display interface. To be specific, a plurality of pieces of parent-node data are expanded at the same time through one operation. In the example shown in FIG. 3, after the user performs the operation of double-clicking the blank part of the display interface, child-node data 121 and data 122 of data 12 and child-node data 131, data 132, and data 133 of data 13 are displayed in the display interface at the same time.

In a second manner, the data lineage presentation operation entered by the user is an operation of clicking a parent node. After the user enters the operation of clicking the parent node, the terminal device sends the operation of clicking the parent node to the service node, and the service node displays child nodes of the parent node in the display interface based on the operation of clicking the parent node. To be specific, one piece of parent-node data is expanded through one operation. In the example shown in FIG. 3, when the user clicks parent-node data 12, child-node data 121 and data 122 are displayed in the display interface. When the user clicks parent-node data 13, child-node data 131, data 132, and data 133 are displayed in the display interface.

It should be understood that the foregoing is only an example of the data lineage presentation operation, and should not constitute a specific limitation. For brevity, the data lineage presentation method in this implementation is not described in detail herein. For details, refer to FIG. 3, FIG. 4A to FIG. 4C, FIG. 5, FIG. 6A to FIG. 6C, FIG. 7A and FIG. 7B, FIG. 8A to FIG. 8C, and related descriptions. Specifically, the first data may refer to child-level data 12, the second data may refer to child-level data 13, the third data may refer to grandchild-level data 121, and the fourth data may refer to grandchild-level data 131. The fifth data may be a child node of data 131, and is not shown in the figure. Analogy may be performed according to a same principle.

FIG. 10 is a flowchart of a data lineage presentation method according to this application. As shown in FIG. 9, the data lineage presentation method in this implementation includes the following steps.

S201: Display first data and second data in a first row/column, where the first data and the second data are data at a same level.

S202: Select, from a second row/column, a location closest to the first data to display third data, and connect the first data and the third data.

S203: Select, from a remaining location in the second row/column, a location closest to the second data to display fourth data, and connect the second data and the fourth data.

Shapes, colors, and transparency of outer frames of the first data to fifth data may be set in the following manner.

In some possible implementations, the outer frames of the first data to the fifth data are represented by using any one of a square frame, a circular frame, an elliptic frame, a triangular frame, a pentagonal frame, a hexagonal frame, a cloud-shaped frame, and a database-shaped frame.

In some possible implementations, the outer frame of the first data and the outer frame of the third data are represented by using a first color, the outer frame of the second data, the outer frame of the fourth data, and the outer frame of the fifth data are represented by using a second color, and the first color is different from the second color.

In some possible implementations, transparency of the outer frame of the second data is greater than transparency of the outer frame of the fourth data, and the transparency of the outer frame of the fourth data is greater than transparency of the outer frame of the fifth data.

A bus between rows/columns may be set in the following manner.

In some possible implementations, a first bus is provided at a location that is between the first row/column and the second row/column and that is close to the second row/column, the first data is connected to the first bus through a line segment, and the third data is connected to the first bus through a line segment; a second bus is provided at a location that is between the first row/column and the second row/column and that is close to the first row/column, the second data is connected to the second bus through a line segment, and the fourth data is connected to the second bus through a line segment; and the first bus and the second bus do not overlap.

A spacing between rows/columns may be set in at least the following manners.

In a first manner, when a quantity of buses between the first row/column and the second row/column is greater than a quantity of buses between the second row/column and the third row/column, a first spacing between the first row/column and the second row/column is equal to a second spacing between the second row/column and the third row/column, where the first spacing is equal to a product of a distance occupied by each bus and the quantity of buses between the first row/column and the second row/column.

In a second manner, when a quantity of buses between the first row/column and the second row/column is greater than a quantity of buses between the second row/column and the third row/column, a first spacing between the first row/column and the second row/column is not equal to a second spacing between the second row/column and the third row/column, where the first spacing is equal to a product of a distance occupied by each bus and the quantity of buses between the first row/column and the second row/column, and the second spacing is equal to a product of the distance occupied by each bus and the quantity of buses between the second row/column and the third row/column.

In a third manner, a size of the first spacing does not vary with the quantity of buses between the first row/column and the second row/column; and a size of the second spacing does not vary with the quantity of buses between the second row/column and the third row/column.

In a fourth manner, a size of the first spacing varies with the quantity of buses between the first row/column and the second row/column; and a size of the second spacing varies with the quantity of buses between the second row/column and the third row/column.

In some possible implementations, after a user uploads the first data to the fifth data, a service node indicates a terminal device to automatically display the first data to the fifth data in a display interface.

For brevity, the data lineage presentation method in this implementation is not described in detail herein. For details, refer to FIG. 3, FIG. 4A to FIG. 4C, FIG. 5, FIG. 6A to FIG. 6C, FIG. 7A and FIG. 7B, FIG. 8A to FIG. 8C, and related descriptions. Specifically, the first data may refer to child-level data 12, the second data may refer to child-level data 13, the third data may refer to grandchild-level data 121, and the fourth data may refer to grandchild-level data 131. The fifth data may be a child node of data 131, and is not shown in the figure. Analogy may be performed according to a same principle.

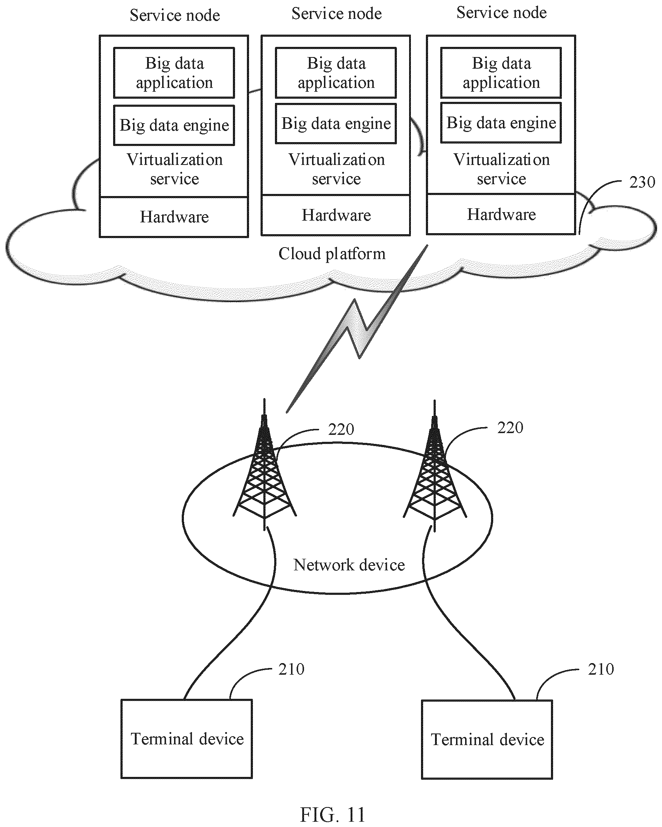

FIG. 11 is a schematic diagram of a data lineage presentation system according to this application. The data lineage presentation system in this implementation includes a terminal device 210, a network device 220, and a cloud platform 230. The terminal device 210 is connected to the cloud platform 230 through the network device 220.

The terminal device 210 may be a smartphone, a cloud terminal, a non-thin client, a thin client, or the like. In a specific embodiment, the terminal device 110 may be a thin client that cooperates with the cloud platform, that is, the terminal device 210 has a strong network communication capability, but a computing capability and a storage capability may be weakened. The terminal device 210 may use a central processing unit (Central Processing Unit, CPU) + graphics processing unit (Graphics Processing Unit, GPU) heterogeneous structure, to implement a good graphics processing capability.

The network device 220 is configured to transmit data between the terminal device 21 and the cloud platform 230 through a communication network of any communication mechanism/communication standard. The communication network may be a wide area network, a local area network, a point-to-point connection, or any combination thereof.

The cloud platform 230 includes a plurality of service nodes, and each service node includes hardware, a virtualization service, a big data engine, and a big data application from bottom to top.

The hardware includes a computing resource, a storage resource, and a network resource. The computing resource may use a heterogeneous computing architecture, for example, a central processing unit (Central Processing Unit, CPU) + graphics processing unit (Graphics Processing Unit, GPU) architecture, a CPU+AI chip, a CPU+GPU+AI chip architecture, or the like. This is not specifically limited herein. The storage resource may be used to store massive data and the like. The virtualization service is a service that constructs resources of a plurality of physical hosts into a unified resource pool by using a virtualization technology, and flexibly isolates mutually independent resources according to a user requirement to run an application of a user.

The virtualization service may include a virtual machine (Virtual Machine, VM) service, a bare metal server (Bare Metal Server, BMS) service, and a container (Container) service. The VM service may be a service in which a virtual machine (Virtual Machine, VM) resource pool is virtualized on a plurality of physical hosts by using a virtualization technology to provide a VM for a user to use according to a requirement. The BMS service is a service in which a BMS resource pool is virtualized on a plurality of physical hosts to provide a BMS for a user to use according to a requirement. The container service is a service in which a container resource pool is virtualized on a plurality of physical hosts to provide a container for a user to use according to a requirement. The VM is a simulated virtual computer, that is, a logical computer. The BMS is an elastically scalable highperformance computing service whose computing performance is the same as that of a conventional physical machine, and has a characteristic of secure physical isolation. The container is a kernel virtualization technology, and can provide lightweight virtualization to isolate user space, processes, and resources. It should be understood that the VM service, the BMS service, and the container service in the virtualization service are merely specific examples. In actual application, the virtualization service may further include another lightweight or heavyweight virtualization service. This is not specifically limited herein.

The big data engine may include data storage, a file system, a scheduling and management service, data processing, a query service, an analysis and report tool, and the like. The data storage may include a database based on distributed file storage, a database based on a key-value (key-value) pair, an NOSQL graphics database, a hybrid non-relational database, and the like, for example, MongoDB, Redis, HDFS, HBASE, and Cassandra. The file system may be a distributed file system or a cluster file system, such as HDFS, GlusterFS, Ceph, Lustre,Alluxio, and PVFS. The scheduling and management service is used to implement resource management and job scheduling, such as Azkaban, YARN, Mesos, Ambari, and ZooKeeper. The query service is used to query data, such as Presto, Drill, Phoenix, Hive, SparkSQL, Stinger, and Elasticsearch. The analysis and report tool is used to analyze data, such as Kettle, Kylin, Kibana, Druid, KNIME, Zeppelin, Talend Open Studio, Splunk, Pentaho, Jaspersoft, and SpagoBISpago.

The big data application may be an application provided on the market, or may be an application developed by a user. This is not specifically limited herein.

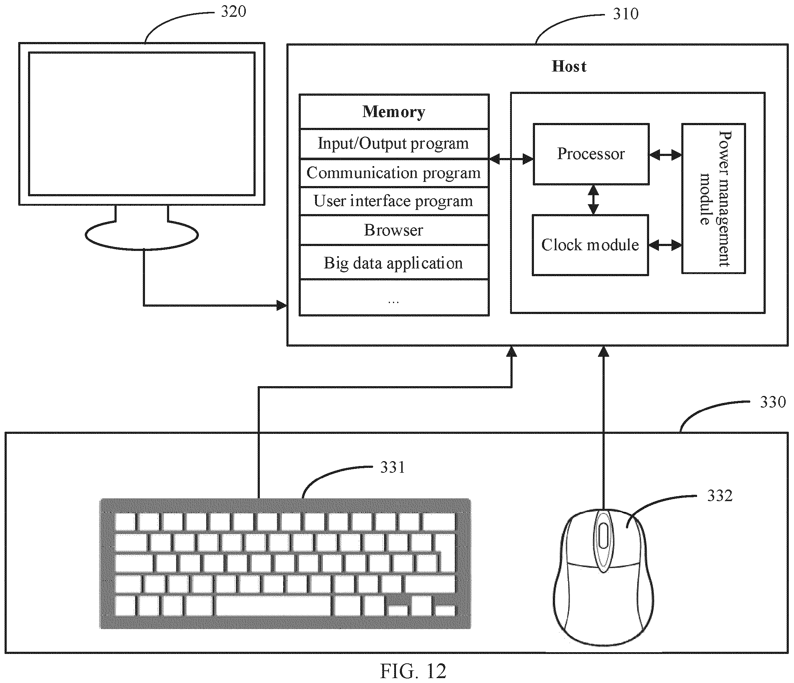

FIG. 12 is a block diagram of a structure of a terminal device according to this application. As shown in FIG. 12, the terminal device may be a thin client, including a host 310, an output device 320, and an input device 330.

The host 310 may include one or more processors, a clock module, and a power management module in an integrated manner. The clock module integrated into the host 310 is mainly configured to generate a clock required for data transmission and timing control for the processor. The power management module integrated into the host 310 is mainly configured to provide a stable and highly accurate voltage for the processor, the output device 320, and the input device 330. The host 310 is further integrated with a memory, configured to store various software programs and/or a plurality of groups of instructions. In specific implementation, the memory may include a high-speed random access memory, and may also include a non-volatile memory, such as one or more magnetic disk storage devices, a flash memory device, or another non-volatile solid-state storage device. The memory may not need to be installed with an operating system and a large quantity of applications. The memory needs only to store some necessary applications, for example, an input/output program. The input/output program may be used to communicate with one or more input devices or output devices. A communication program may be used to communicate with a cloud platform. The memory may further store a user interface program. The user interface program may display data lineage content vividly by using a graphical operation interface, and receive a control operation of a user by using an input control such as a menu, a dialog box, and a button.

The output device 320 mainly includes a display, and the display may include a cathode ray tube (Cathode Ray Tube, CRT), a plasma display panel (Plasma Display Panel, PDP), a liquid crystal display (Liquid Crystal Display, LCD), or the like. For example, the display is an LCD. The liquid crystal display includes a liquid crystal panel and a backlight module. The liquid crystal display panel includes a polarizing film, a glass substrate, a black matrix, a color filter, a protective film, a common electrode, a calibration layer, a liquid crystal layer (liquid crystal, interval, sealant), a capacitor, a display electrode, a prism layer, and a light diffusion layer. The backlight module includes a lighting source, a reflective plate, a light guide plate, a diffusion sheet, a brightening film (prismatic lens), a frame, and the like.

The input device 330 may include a keyboard and a mouse. The keyboard and the mouse are the most commonly used and main input devices. An English letter, number, punctuation, and the like can be entered to a computer by using the keyboard, to give a command and enter data to the computer. Vertical and horizontal coordinate positioning can be quickly performed by using the mouse, to simplify an operation. The keyboard may include a mechanical keyboard, a plastic film keyboard (Mechanical), a conductive rubber keyboard (Membrane), a contactless electrostatic capacitive keyboard (Capacitives), or the like. The mouse may include a rolling-ball mouse, an optical mouse, a wireless mouse, or the like.

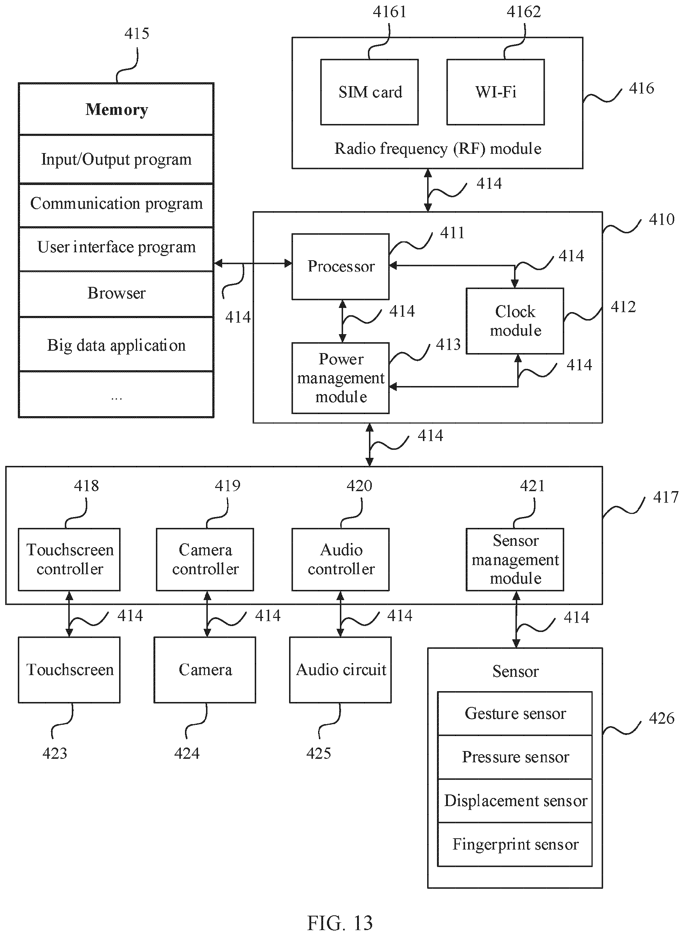

FIG. 13 is a block diagram of a structure of a terminal device according to this application. As shown in FIG. 13, the terminal device may be a smartphone, including a baseband chip 410, a memory 415 that includes one or more computer-readable storage media, a radio frequency (RF) module 416, and a peripheral system 417. These components may communicate on one or more communications buses 414.

The peripheral system 417 is mainly configured to implement an interaction function between the terminal device and a user/an external environment, and mainly includes an input/output apparatus of the terminal device. In specific implementation, the peripheral system 417 may include a touchscreen controller 418, a camera controller 419, an audio controller 420, and a sensor management module 421. Each controller may be coupled to a corresponding peripheral device, such as a touchscreen 423, a camera 424, an audio circuit 425, and a sensor 426. In some embodiments, a gesture sensor in the sensor 426 may be configured to receive a gesture control operation entered by the user. A pressure sensor in the sensor 426 may be disposed below the touchscreen 423, and may be configured to collect touch pressure applied to the touchscreen 423 when the user enters a touch operation by using the touchscreen 423. It should be noted that the peripheral system 417 may further include another I/O peripheral.

The baseband chip 410 may include one or more processors 411, a clock module 412, and a power management module 413 in an integrated manner. The clock module 412 integrated into the baseband chip 410 is mainly configured to generate a clock required for data transmission and timing control for the processor 411. The power management module 413 integrated into the baseband chip 410 is mainly configured to provide a stable and highly accurate voltage for the processor 411, the radio frequency module 416, and the peripheral system.

The memory 415 is configured to store various software programs and/or a plurality of groups of instructions. In specific implementation, the memory may include a high-speed random access memory, and may also include a non-volatile memory, such as one or more magnetic disk storage devices, a flash memory device, or another non-volatile solid-state storage device. The memory may not need to be installed with an operating system and a large quantity of applications. The memory needs only to store some necessary applications, for example, an input/output program. The input/output program may be used to communicate with one or more input devices or output devices. A communication program may be used to communicate with a cloud phone. The memory may further store a home screen program.

The radio frequency (RF) module 416 is configured to receive and send radio frequency signals, and mainly integrates a receiver and a transmitter of the terminal device. The radio frequency (RF) module 416 communicates with a communication network and another communications device by using radio frequency signals. In specific implementation, the radio frequency (RF) module 416 may include but is not limited to an antenna system, an RF transceiver, one or more amplifiers, a tuner, one or more oscillators, a digital signal processor, a CODEC chip, a SIM card 4161, a storage medium, and the like. In addition, the radio frequency module may further include a short-distance wireless communications module such as Wi-Fi 4162 or Bluetooth. In some embodiments, the radio frequency (RF) module 416 may be implemented on a separate chip.

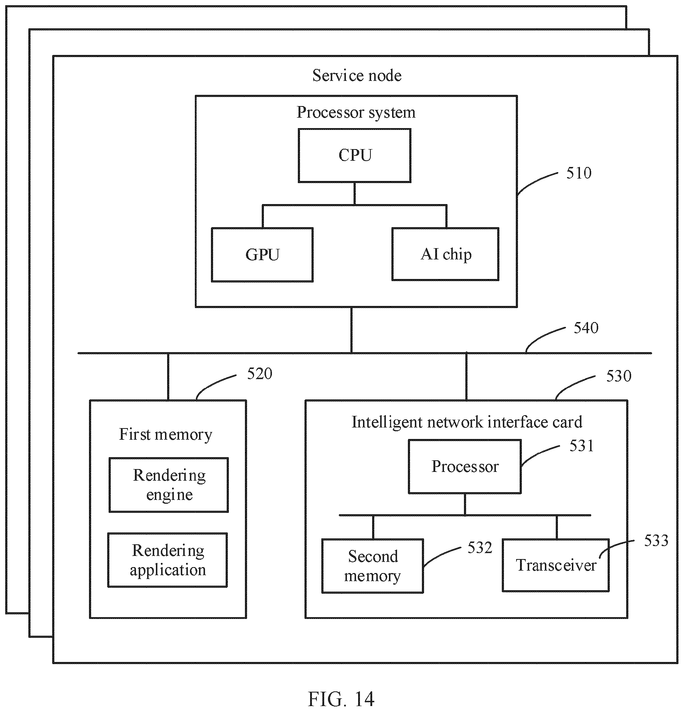

FIG. 14 is a block diagram of a structure of a cloud platform according to an implementation. As shown in FIG. 14, the cloud platform may include one or more service nodes. The service node includes a processor system 510, a first memory 520, an intelligent network interface card 530, and a bus 540.

The processor system 510 may use a heterogeneous structure, that is, include one or more general-purpose processors and one or more special processors, such as a GPU or an AI chip. The general-purpose processor may be any type of device that can process an electronic instruction, including a central processing unit (Central Processing Unit, CPU), a microprocessor, a microcontroller, a main processor, a controller, an application-specific integrated circuit (Application-Specific Integrated Circuit, ASIC), and the like. The general-purpose processor executes various types of digital storage instructions, such as a software or firmware program stored in the first memory 520. In a specific embodiment, the general-purpose processor may be an x86 processor or the like. The general-purpose processor sends a command to the first memory 520 through a physical interface, to complete a storage-related task. For example, commands that may be provided by the general-purpose processor include a read command, a write command, a copy command, an erase command, and the like. The command may specify an operation related to a specific page and block of the first memory 520. The special processor is configured to complete a complex operation of image rendering, and the like.

The first memory 520 may include a random access memory (Random Access Memory, RAM), a flash memory (Flash Memory), or the like, or may be a RAM, a read-only memory (Read-Only Memory, ROM), a hard disk drive (Hard Disk Drive, HDD), or a solid-state drive (Solid-State Drive, SSD). The first memory 520 stores program code for implementing a rendering engine and a rendering application.

The intelligent network interface card 530 is further referred to as a network interface controller, a network interface card, or a local area network (Local Area Network, LAN) adapter. Each intelligent network interface card 530 has a unique MAC address, which is burnt into a read-only storage chip by a manufacturer of the intelligent network interface card 530 during production. The intelligent network interface card 530 includes a processor 531, a second memory 532, and a transceiver 533. The processor 531 is similar to the general-purpose processor, but a performance requirement on the processor 531 may be lower than a performance requirement on the general-purpose processor. In a specific embodiment, the processor 531 may be an ARM processor or the like. The second memory 532 may also be a flash memory, an HDD, or an SDD, and a storage capacity of the second memory 532 may be less than a storage capacity of the first memory 520. The transceiver 533 may be configured to receive and send packets, and upload a received packet to the processor 531 for processing. The intelligent network interface card 530 may further include a plurality of ports, and the ports may be of any one or more of three interface types: a thick-cable interface, a thincable interface, and a twisted-pair interface.

The processor system 510 of the cloud platform may read a program in the first memory 520, to perform the following several methods.

In a first method, the intelligent network interface card 530 is configured to receive first data, second data, third data, and fourth data, where the first data and the second data are data at a same level, the third data and the fourth data are data at a same level, the first data is a parent node of the third data, the second data is a parent node of the fourth data, the first data is displayed at a first location in a first row/column of a display interface, and the second data is displayed at a second location in the first row/column of the display interface.

The processor system 510 is configured to obtain a data lineage presentation operation entered by a user.

The processor system 510 is configured to indicate, based on the data lineage presentation operation, a terminal device to display the third data in the display interface, where the third data is displayed at a third location that is in a second row/column and that is close to the first location.

The processor system 510 is configured to indicate, based on the data lineage presentation operation, the terminal device to display the fourth data in the display interface, where the fourth data is displayed at a fourth location that is in a remaining location in the second row/column and that is close to the second location.

In a second method, the processor system 510 is configured to indicate a terminal device to display first data at a first location in a first row/column of a display interface and display second data at a second location, where the first data and the second data are data at a same level.

The processor system 510 is configured to select, from a second row/column of the display interface, a third location close to the first data, and indicate the terminal device to display third data at the third location.

The processor system 510 is configured to select, from a remaining location in the second row/column of the display interface, a fourth location close to the second location, and indicate the terminal device to display fourth data at the fourth location.

The third data and the fourth data are data at a same level, the first data is a parent node of the third data, and the second data is a parent node of the fourth data.

For brevity, the terminal device in this implementation is not described in detail herein. For details, refer to FIG. 3, FIG. 4A to FIG. 4C, FIG. 5, FIG. 6A to FIG. 6C, FIG. 7A and FIG. 7B, FIG. 8A to FIG. 8C, and related descriptions. Specifically, the first data may refer to child-level data 12, the second data may refer to child-level data 13, the third data may refer to grandchild-level data 121, and the fourth data may refer to grandchild-level data 131. In addition, the service node may perform the data lineage presentation method shown in FIG. 9, or the service node may perform the data lineage presentation method shown in FIG. 10.

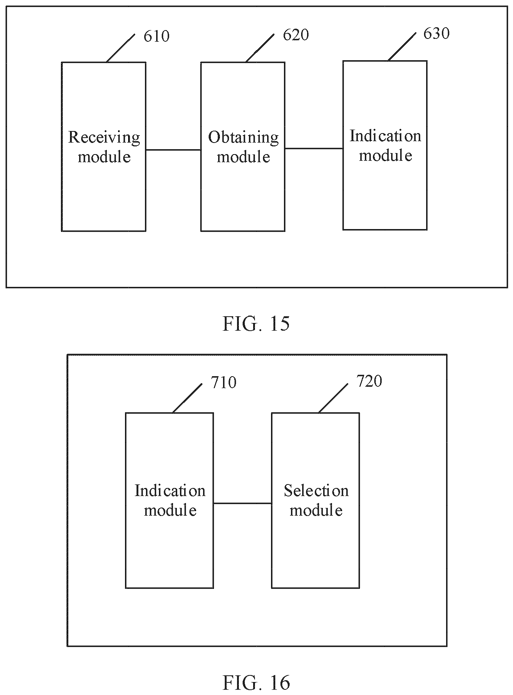

FIG. 15 is a schematic diagram of a structure of a service node according to this application. As shown in FIG. 15, the service node in this implementation includes a receiving module 610, an obtaining module 620, and an indication module 630.

The receiving module 610 is configured to receive first data, second data, third data, and fourth data, where the first data and the second data are data at a same level, the third data and the fourth data are data at a same level, the first data is a parent node of the third data, the second data is a parent node of the fourth data, the first data is displayed at a first location in a first row/column of a display interface, and the second data is displayed at a second location in the first row/column of the display interface.

The obtaining module 620 is configured to obtain a data lineage presentation operation entered by a user.

The indication module 630 is configured to display the third data in the display interface based on the data lineage presentation operation, where the third data is displayed at a third location that is in a second row/column and that is close to the first location.

The indication module 630 is configured to display the fourth data in the display interface based on the data lineage presentation operation, where the fourth data is displayed at a fourth location that is in a remaining location in the second row/column and that is close to the second location.

For brevity, the service node in this implementation is not described in detail herein. For details, refer to FIG. 3, FIG. 4A to FIG. 4C, FIG. 5, FIG. 6A to FIG. 6C, FIG. 7A and FIG. 7B, FIG. 8A to FIG. 8C, and related descriptions. Specifically, the first data may refer to child-level data 12, the second data may refer to child-level data 13, the third data may refer to grandchild-level data 121, and the fourth data may refer to grandchild-level data 131. In addition, the service node may perform the data lineage presentation method shown in FIG. 9.

FIG. 16 is a schematic diagram of a structure of a service node according to this application. As shown in FIG. 16, the service node in this implementation includes an indication module 710 and a selection module 720.

The indication module 710 is configured to display first data at a first location in a first row/column of a display interface and display second data at a second location, where the first data and the second data are data at a same level.

The selection module 720 is configured to select, from a second row/column of the display interface, a third location close to the first data, to display third data.

The selection module 720 is further configured to select, from a remaining location in the second row/column of the display interface, a fourth location close to the second location, to display fourth data.

The third data and the fourth data are data at a same level, the first data is a parent node of the third data, and the second data is a parent node of the fourth data.

For brevity, the service node in this implementation is not described in detail herein. For details, refer to FIG. 3, FIG. 4A to FIG. 4C, FIG. 5, FIG. 6A to FIG. 6C, FIG. 7A and FIG. 7B, FIG. 8A to FIG. 8C, and related descriptions. Specifically, the first data may refer to child-level data 12, the second data may refer to child-level data 13, the third data may refer to grandchild-level data 121, and the fourth data may refer to grandchild-level data 131. In addition, the service node may perform the data lineage presentation method shown in FIG. 10.

In the foregoing solution, an average distance between parent nodes and child nodes is relatively short, and a lineage relationship between the parent nodes and the child nodes is easily observed. Therefore, a data lineage relationship is clearly presented.

Based on the descriptions of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any function implemented by a computer program may be easily implemented by using corresponding hardware. In addition, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be embodied in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, or a network device) to perform the method described in embodiments of this application. All or a part of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, all or a part of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

## Claims

1. A data lineage presentation method, wherein the method comprises:
receiving, by a service node, first data, second data, third data, and fourth data, wherein the first data and the second data are data at a same level, the third data and the fourth data are data at a same level, the first data is a parent node of the third data, the second data is a parent node of the fourth data, the first data is displayed at a first location in a first row/column of a display interface, and the second data is displayed at a second location in the first row/column of the display interface;
obtaining a data lineage presentation operation entered by a user;
indicating, based on the data lineage presentation operation, a terminal device to display the third data in the display interface, wherein the third data is displayed at a third location that is in a second row/column and that is close to the first location; and
indicating, based on the data lineage presentation operation, the terminal device to display the fourth data in the display interface, wherein the fourth data is displayed at a fourth location that is in a remaining location in the second row/column and that is close to the second location.

2. The method according to claim 1, wherein the method further comprises:
indicating, based on the data lineage presentation operation, the terminal device to display fifth data in the display interface, wherein the fifth data is displayed at a fifth location that is in a third row/column and that is close to the fourth location, and the fourth data is a parent node of the fifth data.

3. The method according to claim 2, wherein
an outer frame of the first data and an outer frame of the third data are represented by using a first color;
an outer frame of the second data, an outer frame of the fourth data, and an outer frame of the fifth data are represented by using a second color; and
the first color is different from the second color.

4. The method according to claim 3, wherein
transparency of the outer frame of the second data is greater than transparency of the outer frame of the fourth data, and the transparency of the outer frame of the fourth data is greater than transparency of the outer frame of the fifth data.

5. A data lineage presentation method, wherein the method comprises:
indicating a terminal device to display first data at a first location in a first row/column of a display interface and display second data at a second location, wherein the first data and the second data are data at a same level;
selecting, from a second row/column of the display interface, a third location close to the first data, and indicating the terminal device to display third data at the third location; and
selecting, from a remaining location in the second row/column of the display interface, a fourth location close to the second location, and indicating the terminal device to display fourth data at the fourth location, wherein
the third data and the fourth data are data at a same level, the first data is a parent node of the third data, and the second data is a parent node of the fourth data.

6. The method according to claim 5, wherein
selecting, from a third row/column of the display interface, a fifth location close to the fourth location, and indicating the terminal device to display fifth data at the fifth location, wherein the fourth data is a parent node of the fifth data.

7. The method according to claim 6, wherein
an outer frame of the first data and an outer frame of the third data are represented by using a first color;
an outer frame of the second data, an outer frame of the fourth data, and an outer frame of the fifth data are represented by using a second color; and
the first color is different from the second color.

8. The method according to claim 7, wherein
transparency of the outer frame of the second data is greater than transparency of the outer frame of the fourth data, and the transparency of the outer frame of the fourth data is greater than transparency of the outer frame of the fifth data.

9. A service node, comprising a receiving module, an obtaining module, and an indication module, wherein
the receiving module is configured to receive first data, second data, third data, and fourth data, wherein the first data and the second data are data at a same level, the third data and the fourth data are data at a same level, the first data is a parent node of the third data, the second data is a parent node of the fourth data, the first data is displayed at a first location in a first row/column of a display interface, and the second data is displayed at a second location in the first row/column of the display interface;
the obtaining module is configured to obtain a data lineage presentation operation entered by a user;
the indication module is configured to indicate, based on the data lineage presentation operation, a terminal device to display the third data in the display interface, wherein the third data is displayed at a third location that is in a second row/column and that is close to the first location; and
the indication module is configured to indicate, based on the data lineage presentation operation, the terminal device to display the fourth data in the display interface, wherein the fourth data is displayed at a fourth location that is in a remaining location in the second row/column and that is close to the second location.

10. The service node according to claim 9, wherein
the indication module is configured to indicate, based on the data lineage presentation operation, the terminal device to display fifth data in the display interface, wherein the fifth data is displayed at a fifth location that is in a third row/column and that is close to the fourth location, and the fourth data is a parent node of the fifth data.

11. The service node according to claim 10, wherein
an outer frame of the first data and an outer frame of the third data are represented by using a first color;
an outer frame of the second data, an outer frame of the fourth data, and an outer frame of the fifth data are represented by using a second color; and
the first color is different from the second color.

12. The service node according to claim 11, wherein
transparency of the outer frame of the second data is greater than transparency of the outer frame of the fourth data, and the transparency of the outer frame of the fourth data is greater than transparency of the outer frame of the fifth data.

13. A service node, wherein the service node comprises an indication module and a selection module;
the indication module is configured to indicate a terminal device to display first data at a first location in a first row/column of a display interface and display second data at a second location, wherein the first data and the second data are data at a same level;
the selection module is configured to select, from a second row/column of the display interface, a third location close to the first data,
the indication module is configured to indicate the terminal device to display third data at the third location;
the selection module is further configured to select, from a remaining location in the second row/column of the display interface, a fourth location close to the second location;
the indication module is configured to indicate the terminal device to display fourth data at the fourth location; and
the third data and the fourth data are data at a same level, the first data is a parent node of the third data, and the second data is a parent node of the fourth data.

14. The service node according to claim 13, wherein
the indication module is configured to select, from a third row/column of the display interface, a fifth location close to the fourth location; and
the indication module is configured to indicate the terminal device to display fifth data at the fifth location, wherein the fourth data is a parent node of the fifth data.

15. The service node according to claim 14, wherein
an outer frame of the first data and an outer frame of the third data are represented by using a first color;
an outer frame of the second data, an outer frame of the fourth data, and an outer frame of the fifth data are represented by using a second color; and
the first color is different from the second color.

16. The service node according to claim 15, wherein
transparency of the outer frame of the second data is greater than transparency of the outer frame of the fourth data, and the transparency of the outer frame of the fourth data is greater than transparency of the outer frame of the fifth data.

17. A data lineage presentation system, comprising a terminal device and a cloud platform, wherein the cloud platform is connected to the cloud platform, and the cloud platform performs the method according to any one of claims 1 to 8.

18. A computer-readable storage medium, comprising instructions, wherein when the instructions are run on a service node, the service node is enabled to perform the method according to any one of claims 1 to 8.

19. A cloud platform, wherein the cloud platform comprises a plurality of service nodes, the service node comprises a processor and a memory, and the processor executes code in the memory to perform the method according to any one of claims 1 to 8.
